# FASCICULE DE BREVET EUROPEEN

(11) **EP 2 979 393 B1**
(45) Date de publication et mention de la délivrance du brevet: **08.01.2020**
(21) Numéro de dépôt: 14716963.5
(22) Date de dépôt: 26.03.2014
(51) Int. Cl.: H04L 9/08, H04L 9/32

(54) **PROCEDE D'AUTHENTIFICATION**
AUTHENTIFIZIERUNGSVERFAHREN
AUTHENTICATION METHOD

(30) Priorité: 28.03.2013 FR 1352843
(43) Date de publication de la demande: 03.02.2016
(73) Titulaire: IDCAPT, 84000 Avignon (FR)
(72) Inventeur: SERRADELL, Didier, 84250 Le Thor (FR); ANDRE, Noël, 84000 Avignon (FR)
(74) Mandataire: Nony
(86) Numéro de dépôt international: PCT/IB2014/060184
(87) Numéro de publication internationale: WO 2014/155319

(56) Documents cités:
- EP-A1- 2 219 319
- WO-A1-03/107584
- US-A1- 2008 165 005
- US-A1- 2008 244 714
- US-A1- 2011 225 064
- Klaus Finkenzeller: "Chapter 8: Data Security" In: "RFID Handbook Radio-Frequency Identification Fundamentals and Applications", 1 janvier 1999 (1999-01-01), Wiley, XP055121084, ISBN: 978-0-47-198851-9 pages 151-158, sections 8.1 and 8.2
- STEPHENA WEIS ET AL: "Security and Privacy Aspects of Low-Cost Radio Frequency Identification Systems", 27 janvier 2004 (2004-01-27), SECURITY IN PERVASIVE COMPUTING; [LECTURE NOTES IN COMPUTER SCIENCE;;LNCS], SPRINGER-VERLAG, BERLIN/HEIDELBERG, PAGE(S) 201 - 212, XP019002198, ISBN: 978-3-540-20887-7 section 2, 5.1 and 5.2

## Description

La présente invention concerne un procédé d'authentification d'une étiquette électronique RFID, équipant un produit, par un lecteur mobile utilisant la technologie « Near Field Communication » (NFC).

De nombreux produits sont aujourd'hui contrefaits dans le monde entier. Certaines contrefaçons sont presque indétectables à l'œil nu ou en utilisant des équipements spécialisés. Les produits ainsi contrefaits portent atteinte aux consommateurs et aux fabricants des produits authentiques, dont l'image est dégradée. La contrefaçon perturbe également les opérations économiques de nombreux pays.

Il est nécessaire de contrôler l'authenticité et l'origine des produits pour lutter contre la contrefaçon.

Il a été proposé de marquer les produits, dès leur fabrication, de manière à pouvoir prouver leur authenticité à tout moment, lors notamment de l'achat initial mais également lors de ventes entre particuliers.

Il est ainsi connu d'équiper les produits à authentifier avec une étiquette RFID.

Les demandes CN 202383750, WO 2008/065649, EP 2219 319 et EP 2 453 398 décrivent des systèmes et procédés d'authentification de produits. Un lecteur radiofréquence lit un numéro unique porté par l'étiquette et vérifie, à l'aide d'un serveur relié à une base de données, si ce numéro est présent dans cette dernière. Ces systèmes ne bénéficient pas de contrôles de sécurité suffisants pour garantir l'inviolabilité du procédé d'authentification.

Il existe un besoin pour améliorer encore les procédés d'authentification dans le but de lutter d'une manière encore plus sûre contre la contrefaçon.

L'invention vise à satisfaire ce besoin, et elle y parvient grâce à un procédé d'authentification selon la revendication 1.

Par « *base de données* » il faut comprendre de façon générale tout système informatique disposant d'un système de stockage de données, distant ou non, et de moyens de calcul permettant d'effectuer les tâches nécessaires à l'interrogation du système de stockage et à l'échange d'informations avec le lecteur. La base de données comprend ainsi un ou plusieurs serveurs avec lequel ou lesquels le lecteur peut communiquer.

La ou les valeurs associées au produit, servant à la génération de la ou des clés de sécurité et du code produit haché, peuvent être une ou des valeurs exclusives choisies par le fabricant du produit. Il peut s'agir d'une seule valeur, et cette valeur peut être la même pour tous les produits d'un même modèle, voire d'une même gamme de produits, voire d'un même fabricant.

La dernière étape de vérification a lieu entre le code produit haché transmis par le lecteur à la base de données et le code produit haché enregistré dans cette dernière, préalablement au déroulement du procédé d'authentification, et associé à l'étiquette dont la base de données a reçu l'identifiant unique au début du procédé d'authentification.

L'invention permet de garantir l'inviolabilité du procédé d'authentification. En effet, au moins trois étapes d'une itération du procédé selon l'invention servent à contrôler la sécurité de l'authentification : la vérification de l'identifiant unique de l'étiquette par la base de données, l'accès du lecteur à l'étiquette grâce à la clé de sécurité et la vérification par la base de données de la correspondance entre les données associées à l'étiquette et le code produit haché reçu du lecteur.

Un contrefacteur voulant mettre en œuvre le même procédé, afin de faire passer des produits contrefaits pour des produits authentiques, devrait réussir à reproduire l'étiquette pour satisfaire à ces trois points de contrôle.

En outre, tout au long de l'authentification, les données, notamment la ou les clés de sécurité et le code produit haché, sont cryptées grâce à une fonction de hachage, donc ne sont jamais utilisées en clair.

Grâce à l'utilisation de fonctions de hachage qui permettent d'assurer un résultat différent pour chaque donnée à crypter, la ou les clés de sécurité, qui permettent l'accès au code produit haché, sont avantageusement spécifiques à chaque étiquette et à chaque produit. De même, le code produit haché est unique.

Grâce à l'invention, l'étiquette est ainsi encodée avec un code produit haché unique associé au produit et généré de façon totalement sécurisée, ce qui rend ce code inviolable.

### Lecteur

Le lecteur NFC est avantageusement un appareil mobile intégrant un module de lecture NFC / RFID, tel que « PDA RFID », un téléphone intelligent dit « *smartphone compliant NFC* », une tablette avec lecteur NFC intégré ou un lecteur dédié.

Le lecteur est programmé pour permettre la mise en œuvre du procédé selon l'invention. Le lecteur peut ainsi comporter un ou plusieurs logiciels, encore appelés *« applications* », permettant l'échange de données avec l'étiquette et la base de données. Cette ou ces applications peuvent avoir à être téléchargées depuis un serveur distant sur le lecteur pour la mise en œuvre du procédé d'authentification.

Le lecteur utilise avantageusement une librairie d'authentification contenant les données nécessaires à la mise en œuvre du procédé et étant installée en même temps que lesdites applications.

Préalablement à la mise en œuvre de la première étape ci-dessus du procédé d'authentification selon l'invention, afin de renforcer sa sécurité, l'authenticité du lecteur est vérifiée.

Un identifiant d'habilitation du lecteur peut être généré par une desdites applications liées à la librairie d'authentification, lors de leur installation sur le lecteur, et peut être enregistré dans la base de données. Cet identifiant d'habilitation est avantageusement lié au lecteur, étant par exemple lié à son adresse Media Access Control (MAC) ou à son numéro de série. Cet identifiant peut être sous la forme d'un certificat généré et vérifié par le code source de ladite application.

Avant que le lecteur n'interroge l'étiquette pour lire son identifiant unique, l'identifiant d'habilitation du lecteur peut être envoyé à la base de données, qui autorise les requêtes ultérieures du lecteur uniquement si elle reconnait cet identifiant.

Une vérification de l'authenticité de l'utilisateur du lecteur peut également être mise en œuvre par ce dernier, consistant par exemple en une identification de l'utilisateur en utilisant des moyens de reconnaissance biométriques, tels que la reconnaissance des empreintes digitales ou de l'iris.

### Etiquette électronique

L'étiquette peut être un dispositif électronique, encore appelé « *tag* » en anglais, associé à une norme RFID haute-fréquence, notamment d'une fréquence de 13,56 MHz, par exemple la norme ISO/IEC 14443 Type A ou B ou la norme ISO/IEC 15693, ce dispositif électronique étant par exemple issu d'une gamme du fabricant NXP, telle que la gamme MIFARE® ou autres.

L'identifiant unique de l'étiquette est avantageusement un numéro de série unique défini par le fabricant. La taille de l'identifiant unique de l'étiquette est par exemple de sept octets.

L'identifiant unique de l'étiquette est enregistré, lors de la fabrication de cette dernière, dans un espace de sa mémoire d'où il ne peut être modifié, supprimé ou copié.

Le code produit haché est avantageusement enregistré dans une partie de la mémoire de l'étiquette, appelée « *bloc* ». Ce bloc est de préférence uniquement dédié au produit à authentifier.

Le bloc dédié au produit à authentifier est accessible en lecture grâce à la clé de sécurité, qui est dans ce cas une clé de lecture.

Une deuxième clé de sécurité peut être générée, servant notamment à l'écriture dans le bloc dédié au produit à authentifier et étant alors une clé d'écriture.

Grâce à l'utilisation de fonctions de hachage, les clés de lecture et d'écriture sont avantageusement différentes l'une de l'autre.

Dans une variante, le code produit haché est copié et enregistré dans différentes parties de la mémoire de l'étiquette, étant accessible dans chacune de ces parties grâce à différentes clés de sécurité uniques générées comme expliqué précédemment. Le code produit haché peut également être tronqué en plusieurs sous-codes, enregistrés dans différentes parties de la mémoire de l'étiquette et accessibles dans chacune de ces parties grâce à différentes clés de sécurité uniques générées comme expliqué précédemment. Cela permet de renforcer l'inviolabilité du code produit et donc la sécurité du procédé d'authentification.

La localisation de l'étiquette dans le produit est déterminée selon les exigences du fabricant du produit, ou correspond à un emplacement prévu à cet effet, et/ou peut répondre à des conditions environnementales, telles que les conditions d'usage du produit, le risque de détérioration et/ou de destruction, le risque de piratage, la durée de vie de l'étiquette et/ou du produit et/ou l'espace disponible sur le produit.

Ces conditions peuvent déterminer également le type d'encapsulage ou de support choisi, par exemple sous forme de capsule, de plaque ou de disque, ainsi que le mode de lecture de l'étiquette par le lecteur, notamment la distance à laquelle le lecteur doit être approché du produit portant l'étiquette.

L'étiquette peut être pourvue d'un système de destruction physique en cas de tentative d'arrachage de l'étiquette du produit qu'elle équipe. Ce système de destruction physique repose par exemple sur l'endommagement d'une antenne de l'étiquette en cas de tentative d'enlèvement de l'étiquette.

La mémoire de l'étiquette électronique peut en outre comporter des informations dites publiques non cryptées, telles que des informations commerciales ou techniques relatives au produit, par exemple des informations lues par le lecteur sans aucune application spécifique en mode natif, des informations dites confidentielles dont l'exploitation est réservée et qui peuvent être exploitées depuis des applications spécifiques, et/ou des informations répondant aux besoins industriels du produit, encodées par exemple selon les normes RFID et exploitées par des lecteurs spécifiques.

### Base de données

La base de données est de préférence externe au lecteur. Elle n'est ainsi pas accessible à l'utilisateur du lecteur, ce qui permet d'accroître la sécurité lors de la mise en œuvre du procédé.

La base de données n'est pas gérée par le lecteur, ce qui permet de complexifier la mise en œuvre de l'authentification et ainsi d'augmenter le niveau de sécurité.

La base de données peut être gérée par le fabricant du produit à authentifier ou par un tiers, par exemple une entreprise sous-traitante ou l'entreprise fournissant les étiquettes encodées à intégrer au produit.

La base de données peut comporter des informations commerciales de toutes sortes relatives au produit et/ou des codes de traçabilité industrielle du produit

La ou les clés de sécurité et le code produit haché sont enregistrés dans la base de données, de préférence par le biais d'un ou de plusieurs fichiers encryptés et protégés par un mot de passe généré de façon aléatoire.

Le transfert des données vers la base de données peut se faire à partir d'un transfert de fichiers sécurisé, utilisant par exemple la technologie « Virtual Private Network » (VPN).

La base de données comporte avantageusement des algorithmes intégrés permettant la lecture des informations envoyées par le lecteur, notamment la lecture des clés de sécurité et du code produit haché.

La base de données est reliée au lecteur par tout type de réseau, notamment de téléphonie. Plusieurs modes de communication peuvent être mis en œuvre.

La base de données peut générer des alertes en cas de sollicitation abusive du lecteur et/ou empêcher le lecteur de la solliciter, notamment dans le cas de sollicitations successives utilisant un même identifiant unique d'étiquette dans un intervalle de temps prédéfini, notamment un court laps de temps, ou dans le cas de sollicitations successives pour un même lecteur utilisant des identifiants uniques d'étiquette non enregistrés dans la base, ou encore dans le cas de sollicitations dans un intervalle de temps prédéfini, notamment un court laps de temps, utilisant un même identifiant unique d'étiquette à des positions géographiques du lecteur différentes et éloignées les unes des autres, ces positions géographiques différentes correspondant par exemple à des adresses internet différentes et à des fournisseurs d'accès à internet différents.

Le nombre de sollicitations successives utilisant un même identifiant unique d'étiquette en une journée peut être limité à un nombre prédéfini de sollicitations. Le nombre de sollicitations successives pour un même lecteur utilisant des identifiants uniques d'étiquette non enregistrés dans la base en une journée peut être limité à un nombre prédéfini de sollicitations.

Un nombre journalier limité de sollicitations de la base de données par un même lecteur peut être prévu.

### Authentification

La fonction de hachage utilisée est de préférence une fonction de hachage de type « Message Digest 5 » (MD5), mais une autre fonction de hachage peut être utilisée, telle qu'une fonction de hachage de type « Message Digest 4 » (MD4), de type « Secure Hash Algorithm 1 » (SHA-1) ou de type « Secure Hash Algorithm 2 » (SHA-2). Différents moteurs de hachage peuvent être utilisés pour générer les clés de sécurité, notamment dans le cas où le code produit haché est enregistré plusieurs fois dans la mémoire de l'étiquette. Ceci permet de complexifier la génération des clés et de renforcer la sécurité du procédé d'authentification.

La ou les fonctions de transformation utilisées sont de préférence des opérations de concaténation. Lors de la génération de ladite au moins une clé de sécurité, ladite valeur associée au produit est ainsi avantageusement concaténée à l'identifiant unique de l'étiquette. Lors de la génération du code produit haché, la valeur associée au produit est avantageusement concaténée à l'identifiant unique de ce dernier, étant par exemple placée derrière ou devant ledit identifiant unique.

Dans une variante, plusieurs valeurs associées au produit sont concaténées à l'identifiant unique de l'étiquette et/ou à l'identifiant du produit.

La taille de ladite au moins une clé de sécurité peut être inférieure à la taille du résultat de la fonction de hachage appliquée à l'identifiant unique de l'étiquette modifié par la fonction de transformation ayant comme paramètre au moins la valeur associée au produit.

Ladite au moins une clé de sécurité est ainsi avantageusement générée par une extraction aléatoire de caractères du résultat de la fonction de hachage appliquée à l'identifiant unique de l'étiquette modifié par la fonction de transformation ayant comme paramètre la valeur associée au produit, ou par une troncature aléatoire dudit résultat. Cela renforce les chances d'obtenir des clés de sécurité uniques et spécifiques à chaque étiquette et à chaque produit.

La taille du résultat de la fonction de hachage appliquée à l'identifiant unique de l'étiquette auquel est concaténée la valeur associée au produit peut être d'au moins 8 octets, étant de préférence d'au moins 16 octets.

La taille de ladite au moins une clé de sécurité est de préférence de 6 octets.

L'information confirmant l'authentification du produit, délivrée par la base de données au lecteur, peut être sous la forme d'un certificat d'authenticité du produit, ou tout autre support numérique certifié.

### Lecteur magasin

A la fin de l'authentification, dans le cas où le produit a été reconnu comme authentique, un code peut être enregistré sur le compte client de l'utilisateur, par exemple le numéro du certificat d'authenticité du produit. Ce code peut ensuite être imprimé sur le ticket de caisse lors de la finalisation de l'achat du produit.

Un deuxième lecteur, appelé « *lecteur magasin* », par exemple totalement autonome par rapport au lecteur NFC, peut être utilisé pour générer ledit code.

Ce lecteur magasin peut être disposé à côté de la caisse enregistreuse ou être intégré à celle-ci.

Ce lecteur peut permettre la gestion d'autres données, disponibles dans la base de données et/ou dans la mémoire de l'étiquette, telles que des informations commerciales relatives au produit, des codes de traçabilité industrielle du produit et/ou des données relatives à un espace service pour l'acheteur, lui permettant notamment d'être identifié comme client « VIP » de la marque du produit.

### Produit programme d'ordinateur

L'invention a encore pour objet, selon un autre de ses aspects, un produit programme d'ordinateur comportant des instructions lisibles par un lecteur NFC, ces instructions commandant le fonctionnement du lecteur de manière à mettre en œuvre le procédé d'authentification selon l'invention tel que défini précédemment.

L'invention pourra être mieux comprise à la lecture de la description détaillée qui va suivre, d'un exemple non limitatif de mise en œuvre de celle-ci, et à l'examen du dessin annexé, sur lequel :
- la figure 1 est un schéma représentant différentes étapes du procédé d'authentification d'une étiquette dans un exemple de mise en œuvre de l'invention,
- la figure 2 représente schématiquement le contenu de la mémoire d'une étiquette à authentifier, et
- la figure 3 représente schématiquement le contenu d'une base de données adaptée à la mise en œuvre du procédé d'authentification selon l'invention.

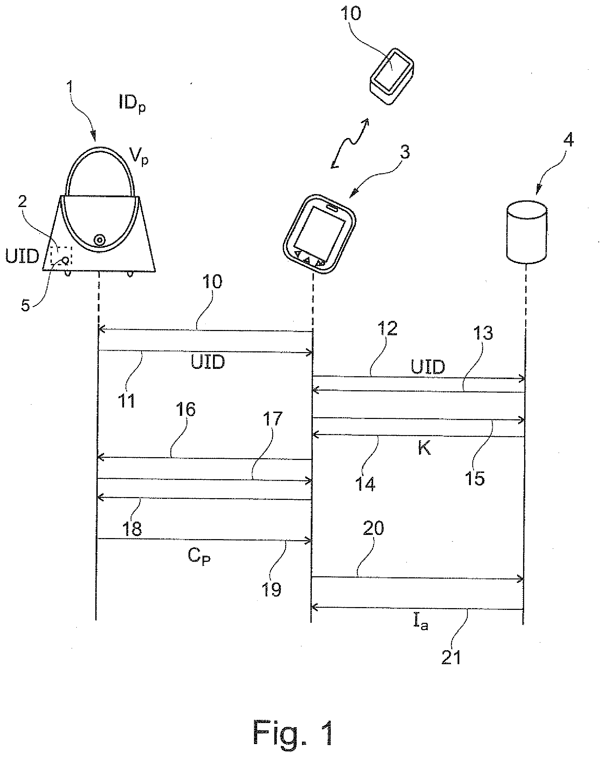

Le procédé selon l'invention fait intervenir un produit 1 à authentifier, équipé d'une étiquette électronique 2, un lecteur NFC 3 et une base de données 4, représentés schématiquement à la figure 1.

Au produit 1 sont attribués un identifiant unique *IDₚ* et une valeur *Salt,* lesquels sont par exemple choisis par le fabricant du produit.

L'étiquette 2, le lecteur 3 et la base de données 4 sont tels que définis précédemment.

L'étiquette 2 comporte une mémoire 5 qui contient de fabrication un identifiant unique *UID,* enregistré par ailleurs dans la base de données 4.

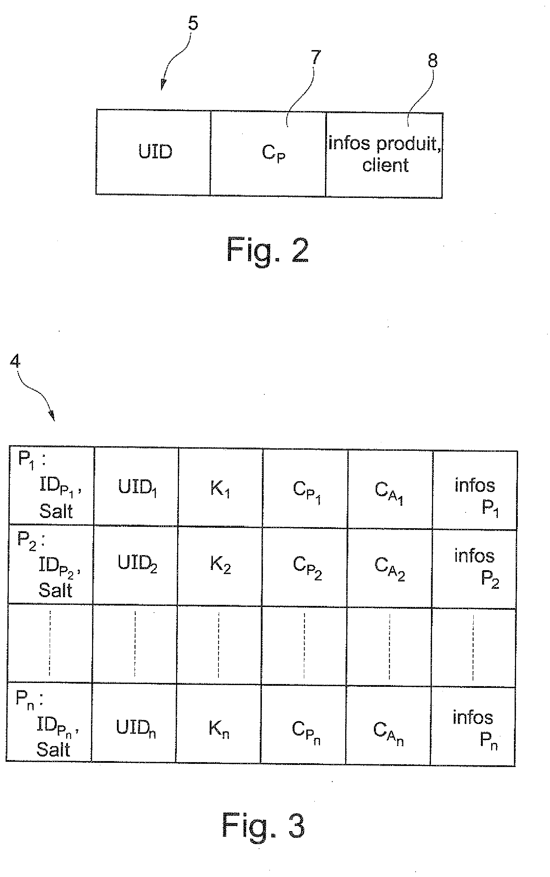

La mémoire 5 contient en outre des informations dites publiques non cryptées, telles que des informations commerciales ou techniques relatives au produit 1, des informations dites confidentielles, des informations répondant aux besoins industriels du produit. Ces informations peuvent être contenues dans une partie 8 de la mémoire 5, comme représenté à la figure 2. Dans une variante, ces informations sont contenues dans le bloc 7 dédié au produit 1.

La base de données 4, externe au lecteur 3, peut échanger des informations avec ce dernier par tout type de réseau, par exemple le réseau de téléphonie mobile dans lequel le lecteur 3 évolue.

Préalablement à la mise en œuvre de l'authentification du produit 1, une clé de sécurité *K* est générée par application d'une fonction de hachage *H* à l'identifiant unique *UID* de l'étiquette 2 modifié par une fonction de transformation *T₁* ayant comme paramètre la valeur *Salt* associée au produit 1. Dans l'exemple décrit, la fonction de transformation *T₁* concatène la valeur *Salt* associée au produit 1 à l'identifiant unique *UID* de l'étiquette 2. Le résultat est tronqué à 6 octets. Cette clé de sécurité *K* est enregistrée dans la base de données 4.

Un code produit haché *Cₚ* unique et associé au produit 1 est également généré, par application d'une fonction de hachage *H* à l'identifiant unique *IDₚ* du produit modifié par une fonction de transformation *T₂*. Dans l'exemple décrit, la fonction de transformation *T₂* concatène la valeur *Salt* associée au produit 1 à l'identifiant unique *IDₚ* du produit, sous la forme par exemple *T₂*(*IDₚ, Salt)* = *IDₚ* & *Salt.* Ce code produit haché *Cₚ* est enregistré dans une partie 7 de la mémoire 5 de l'étiquette 2, uniquement dédiée au produit 1, appelée « bloc » dans la suite et représentée à la figure 2. Le code produit haché *Cₚ* est accessible en lecture grâce à la clé de sécurité *K.* Ce code produit haché *Cₚ* est également enregistré dans la base de données 4.

Dans une variante, le code produit haché *Cₚ* est tronqué en plusieurs sous-codes enregistrés dans différentes parties de la mémoire 5 de l'étiquette 2 et accessibles grâce à différentes clés de sécurité.

Une deuxième clé de sécurité *Kₑ* peut être générée de la même manière que la clé *K* afin de permettre l'écriture dans le bloc 7.

Dans l'exemple décrit, les fonctions de transformation *T₁* et *T₂* sont identiques, étant une opération de concaténation.

Le code produit haché *Cₚ* est ainsi lié à l'identifiant unique *UID* de l'étiquette 2, la clé de sécurité *K* et ce code produit haché *Cₚ* étant générés à partir de la même valeur *Salt* associée au produit 1.

La fonction de hachage *H* permettant de générer la clé de sécurité *K* et le code produit haché *Cₚ* est une fonction de hachage MD5 dans l'exemple décrit. L'invention n'est toutefois pas limitée à l'utilisation d'une fonction de hachage particulière. Différents moteurs de hachage peuvent être utilisés pour générer la ou les clés de sécurité et le code produit haché.

La taille de la clé de sécurité *K* est inférieure à la taille du résultat *H(UID, Salt)* de la fonction de hachage *H* appliquée à l'identifiant unique *UID* de l'étiquette 2 auquel est concaténée la valeur *Salt* associée au produit 1. La clé de sécurité *K* est générée par une extraction aléatoire de caractères dudit résultat *H(T₁(UID, Salt)),* soit dans l'exemple considéré *MD5(UID & Salt).*

La taille du résultat *H(UID, Salt)* est d'au moins 8 octets, étant de 16 octets dans l'exemple décrit. La taille de la clé de sécurité *K* est égale à 6 octets.

La ou les clés de sécurité sont enregistrées dans la base de données 4 par le biais d'un fichier encrypté et protégé par un mot de passe généré de façon aléatoire.

Le transfert des données dans la base de données 4 se fait à partir d'un transfert de fichiers sécurisé, utilisant par exemple la technologie VPN.

La base de données 4 comporte des algorithmes intégrés permettant la lecture des informations envoyées par le lecteur 3, notamment la lecture de la ou des clés de sécurité.

Comme représenté à la figure 3, la base de données 4 contient, pour chaque produit *Pᵢ* = *P₁, P₂* ... *Pₙ,* identifié par son identifiant unique *IDₚᵢ* et auquel est associé une valeur *Salt,* l'identifiant unique *UIDᵢ* de l'étiquette 2ᵢ équipant le produit, au moins une clé de sécurité *Kᵢ* générée comme décrit précédemment, le code produit haché *Cₚᵢ,* et, optionnellement, le certificat d'authenticité *C_{Ai}* du produit *Pᵢ*. La base de données 4 contient également, dans l'exemple décrit, des informations commerciales relatives à chaque produit *Pᵢ* et/ou des informations répondant aux besoins industriels. La valeur *Salt* peut être la même pour tous les produits d'un même modèle, voire d'une même gamme de produits, voire d'un même fabricant.

On va décrire, en référence à la figure 1, un exemple d'itération du procédé d'authentification du produit 1 selon l'invention.

Le lecteur 3, approché à une distance raisonnable de l'étiquette 2, sollicite cette dernière à une étape 10 pour obtenir son identifiant unique *UID.* Le lecteur 3, après avoir récupéré, lors d'une étape 11, l'identifiant unique *UID* de l'étiquette 2, le transmet à la base de données 4 dans une étape 12. Si cet identifiant ne se trouve pas dans la base de données 4, le procédé d'authentification du produit 1 est arrêté et un message d'erreur est envoyé au lecteur 3.

Si, par contre, l'identifiant unique *UID* de l'étiquette 2 est enregistré dans la base de données 4, cette dernière répond positivement au lecteur 3 lors d'une étape 13, et le procédé d'authentification du produit 1 se poursuit.

Lors d'une étape 14, le lecteur 3 envoie une requête à la base de données 4 pour obtenir la clé de sécurité *K* associée à l'identifiant unique *UID* de l'étiquette 2. La base de données 4 lui transmet cette clé lors d'une étape 15.

Le lecteur 3 envoie ensuite à l'étiquette 2, lors d'une étape 16, une requête de lecture du bloc 7 de sa mémoire 5 grâce à la clé de sécurité *K*. En cas de réponse négative de l'étiquette 2, le procédé d'authentification du produit 1 est arrêté.

En cas de réponse positive de l'étiquette 2 envoyée lors d'une étape 17, le lecteur 3 lit, lors de l'étape suivante 18, le contenu du bloc 7, c'est-à-dire le code produit haché *Cₚ,* grâce à la clé de sécurité *K.* Le lecteur 3 récupère ainsi ce code produit *Cₚ* dans une étape 19.

Le lecteur 3 envoie, lors d'une étape 20, une requête à la base de données 4 pour vérifier si le code produit haché *Cₚ* correspond au code produit haché enregistré dans la base de données 4 et associé à l'identifiant unique *UID* de l'étiquette 2 reçue par la base de données 4 à l'étape 12. Si ces codes produit *Cₚ* ne correspondent pas, la base de données 4 envoie un message d'erreur au lecteur 3 l'informant que le produit 1 n'est pas reconnu.

En cas de correspondance, par contre, le lecteur 3 reçoit de la base de données 4, lors d'une étape 21, une information *Iₐ* confirmant l'authenticité du produit 1. Cette information *Iₐ* est par exemple sous la forme d'un certificat d'authenticité *C_{A}* du produit 1.

Dans un exemple de mise en œuvre de l'invention, à la fin de l'authentification, dans le cas où le produit 1 a été reconnu comme authentique, le lecteur 3 commande un lecteur magasin 10 pour générer un code destiné à être enregistré sur un compte client de l'acheteur du produit, par exemple le numéro du certificat d'authenticité *C_{A}* du produit 1 ou l'identifiant unique *UID* de l'étiquette. Ce code peut ensuite être imprimé sur le ticket de caisse lors de la finalisation de l'achat du produit.

Le procédé selon l'invention peut être mis en œuvre dans un lieu de vente du produit, par exemple une boutique d'une grande marque de luxe ou un magasin multimarques. Les vendeurs de ce lieu de vente approchent le lecteur 3 du produit 1 à authentifier, par exemple lors de la vente de ce produit, ou lorsqu'un consommateur, qui a acquis ce bien ailleurs, vient vérifier l'authenticité dudit produit. Le procédé peut encore être mis en œuvre par les douanes, ou par les particuliers dans le cas de la revente.

Une ou plusieurs applications ont été au préalable téléchargées sur le lecteur 3, pour permettre la mise en œuvre du procédé d'authentification.

Préalablement à la première étape 10 du procédé d'authentification selon l'invention, une vérification de l'authenticité du lecteur 3 et/ou de son utilisateur peut être mise en œuvre.

La base de données 4 peut générer des alertes en cas de sollicitation abusive du lecteur 3 et/ou empêcher ce dernier de la solliciter.

Un nombre journalier limité de sollicitations de la base de données 4 par le lecteur 3 peut être prévu.

L'invention n'est pas limitée aux exemples qui viennent d'être décrits.

Le procédé d'authentification selon l'invention peut être appliqué à tous produits.

Le procédé d'authentification selon l'invention peut également être appliqué à l'identification de personnes et à la gestion de lieux à accès restreint. Dans ce cas, l'étiquette peut constituer un badge d'accès à un lieu, et le procédé peut permettre de vérifier que la personne portant le badge a un accès valide.

L'expression « comportant un » doit être comprise comme étant synonyme de « comportant au moins un ».

## Revendications

1. Procédé d'authentification par un lecteur NFC (3) d'une étiquette électronique (2) équipant un produit (1), le produit (1) ayant un identifiant (*IDₚ*)*,* l'étiquette (2) comprenant une mémoire (5) contenant, de fabrication, un identifiant unique d'étiquette (*UID*) enregistré par ailleurs dans une base de données (4),
le procédé étant **caractérisé en ce qu'**au moins une clé de sécurité (*K*) a été générée à partir de l'application d'une fonction de hachage (*H*) à l'identifiant unique (*UID*) de l'étiquette (2) modifié par une fonction de transformation (*T₁*) ayant comme paramètre au moins une valeur (*Salt*) associée au produit (1), ladite au moins une clé de sécurité (*K*) étant enregistrée dans la base de données (4), un code produit haché (*Cₚ*) associé au produit (1), ayant été généré à partir de l'application d'une fonction de hachage (*H*) à l'identifiant (*IDₚ*) du produit modifié par une fonction de transformation (*T₂*) ayant comme paramètre au moins la même valeur (*Salt*) associée au produit (1) et utilisée pour générer ladite au moins une clé de sécurité (*K*)*,* les fonctions de transformation (*T₁*) et (*T₂*) étant identiques, le code produit haché (*Cₚ*) ayant été enregistré dans la mémoire (5) de l'étiquette (2) et dans la base de données (4), et étant accessible lors d'une interrogation de l'étiquette (2) par le lecteur (3) grâce à ladite au moins une clé de sécurité (*K*)*,*
et **en ce que** :
- le lecteur (3) interroge l'étiquette (2) pour lire l'identifiant unique (*UID*) de cette dernière,
- le lecteur (3) transmet l'identifiant unique (*UID*) de l'étiquette (2) à la base de données (4),
- si l'identifiant unique (*UID*) de l'étiquette est enregistré dans la base de données (4), le lecteur (3) reçoit de celle-ci ladite au moins une clé de sécurité (*K*) associée à l'identifiant unique (*UID*) de l'étiquette (2),
- le lecteur (3) envoie une requête de lecture à l'étiquette (2) grâce à ladite au moins une clé de sécurité (*K*) reçue de la base de données (4),
- en cas de réponse positive de l'étiquette (2), le lecteur (3) lit, grâce à ladite au moins une clé de sécurité (*K*)*,* le code produit haché (*Cₚ*),
- le lecteur (3) envoie une requête à la base de données (4) pour vérifier si le code produit haché (*Cₚ*) transmis par l'étiquette (2) correspond au code produit haché associé à l'étiquette et enregistré dans la base de données (4), et
- en cas de correspondance, le lecteur (3) reçoit de la base de données (4) une information (*Iₐ*) confirmant l'authenticité du produit (1).

2. Procédé selon la revendication 1, dans lequel le code produit haché (*Cₚ*) est enregistré dans une partie (7), uniquement dédiée au produit (1), de la mémoire (5) de l'étiquette (2).

3. Procédé selon la revendication 1 ou 2, dans lequel le code produit haché (*Cₚ*) est enregistré dans différentes parties de la mémoire (5) de l'étiquette (2) et est accessible dans chacune de ces parties grâce à différentes clés de sécurité uniques.

4. Procédé selon l'une quelconque des revendications 1 à 3, dans lequel la fonction de hachage (*H*) est une fonction de hachage MD5.

5. Procédé selon l'une quelconque des revendications précédentes, dans lequel la fonction de transformation (*T*) correspond à la concaténation avec au moins la valeur (*Salt*) associée au produit (1), s'écrivant *T(X)* = *X & Salt.*

6. Procédé selon l'une quelconque des revendications précédentes, dans lequel la taille de ladite au moins une clé de sécurité (*K*) est inférieure à la taille du résultat *(H (T₁ (UID, Salt))*) de la fonction de hachage (*H*) appliquée à l'identifiant unique (*UID*) de l'étiquette (2) modifié par la fonction de transformation *(T₁)* ayant comme paramètre la valeur (*Salt*) associée au produit (1), ladite au moins une clé de sécurité (*K*) étant notamment générée par une extraction aléatoire de caractères dudit résultat *(H (T₁ (UID, Salt))*) ou par une troncature de ce résultat.

7. Procédé selon l'une quelconque des revendications précédentes, dans lequel la taille du résultat *(H (T₁ (UID, Salt))*) de la fonction de hachage *(H)* appliquée à l'identifiant unique *(UID)* de l'étiquette (2) modifié par ladite fonction de transformation *(T₁)* est supérieure ou égale à 16 octets.

8. Procédé selon l'une quelconque des revendications précédentes, dans lequel la taille de ladite au moins une clé de sécurité (*K*) est égale à 6 octets.

9. Procédé selon l'une quelconque des revendications précédentes, dans lequel l'information (*I_{α}*) confirmant l'authenticité du produit (1), délivrée par la base de données (4) au lecteur (3), est sous la forme d'un certificat d'authenticité (*C_{A}*) du produit.

10. Procédé selon l'une quelconque des revendications précédentes, dans lequel ladite au moins une clé de sécurité (*K*) et le code produit haché (*Cₚ*) sont enregistrés dans la base de données (4) par le biais d'un fichier encrypté et protégé par un mot de passe, notamment généré de façon aléatoire.

11. Procédé selon l'une quelconque des revendications précédentes, dans lequel la base de données (4) comporte des algorithmes intégrés permettant la lecture des informations envoyées par le lecteur (3), notamment la lecture de ladite au moins une clé de sécurité (*K*) et du code produit haché (*Cₚ*)*.*

12. Procédé selon l'une quelconque des revendications précédentes, dans lequel la base de données (4) est externe au lecteur (3).

13. Procédé selon l'une quelconque des revendications précédentes, dans lequel une ou plusieurs applications, destinées à la mise en œuvre du procédé, sont téléchargées sur le lecteur (3) depuis un serveur distant.

14. Procédé selon l'une quelconque des revendications précédentes, dans lequel, après que le produit (1) a été reconnu comme authentique, le lecteur (3) commande un lecteur magasin (10) pour générer un code destiné à être enregistré sur le compte client de l'utilisateur, ce lecteur magasin étant notamment totalement autonome par rapport au lecteur (3).

## Patentansprüche

1. Verfahren zur Authentifizierung, durch ein NFC-Lesegerät (3), eines elektronischen Etiketts (2), mit dem ein Produkt (1) ausgestattet ist, wobei das Produkt (1) eine Kennung (*IDₚ*) aufweist, wobei das Etikett (2) einen Speicher (5) umfasst, der eine herstellungsseitig vergebene eindeutige Etikettenkennung (*UID*) enthält, die außerdem in einer Datenbank (4) registriert ist,
wobei das Verfahren **dadurch gekennzeichnet ist, dass** wenigstens ein Sicherheitsschlüssel (*K*) aus der Anwendung einer Hashfunktion (*H*) auf die durch eine Transformationsfunktion (*T₁*), die als Parameter wenigstens einen dem Produkt (1) zugeordneten Wert (*Salt*) aufweist, modifizierte eindeutige Kennung (*UID*) des Etiketts (2) erzeugt worden ist, wobei der wenigstens eine Sicherheitsschlüssel (*K*) in der Datenbank (4) registriert ist, wobei ein dem Produkt (1) zugeordneter gehashter Produktcode (*Cₚ*) aus der Anwendung einer Hashfunktion (*H*) auf die durch eine Transformationsfunktion (*T₂*)*,* die als Parameter wenigstens denselben dem Produkt (1) zugeordneten und zum Erzeugen des wenigstens einen Sicherheitsschlüssels (*K*) verwendeten Wert (*Salt*) aufweist, modifizierte Kennung (*IDₚ*) des Produkts erzeugt worden ist, wobei die Transformationsfunktionen (*T₁*) und (*T₂*) identisch sind, wobei der gehashte Produktcode (*Cₚ*) im Speicher (5) des Etiketts (2) und in der Datenbank (4) registriert worden ist und bei einer Abfrage des Etiketts (2) durch das Lesegerät (3) mithilfe des wenigstens einen Sicherheitsschlüssels (*K*) zugreifbar ist,
und dadurch, dass:
- das Lesegerät (3) das Etikett (2) abfragt, um die eindeutige Kennung (*UID*) dieses Letzteren zu lesen,
- das Lesegerät (3) die eindeutige Kennung (*UID*) des Etiketts (2) an die Datenbank (4) überträgt,
- falls die eindeutige Kennung (*UID*) des Etiketts in der Datenbank (4) registriert ist, das Lesegerät (3) von dieser den wenigstens einen Sicherheitsschlüssel (*K*) empfängt, welcher der eindeutigen Kennung (*UID*) des Etiketts (2) zugeordnet ist,
- das Lesegerät (3) mithilfe des von der Datenbank (4) empfangenen wenigstens einen Sicherheitsschlüssels (*K*) eine Leseanforderung an das Etikett (2) sendet,
- im Falle einer positiven Antwort des Etiketts (2) das Lesegerät (3) mithilfe des wenigstens einen Sicherheitsschlüssels (*K*) den gehashten Produktcode (*Cₚ*) liest,
- - das Lesegerät (3) eine Anforderung an die Datenbank (4) sendet, um zu überprüfen, ob der von dem Etikett (2) übertragene gehashte Produktcode (*Cₚ*) dem gehashten Produktcode entspricht, der dem Etikett zugeordnet und in der Datenbank (4) registriert ist, und
- im Falle einer Entsprechung das Lesegerät (3) von der Datenbank (4) eine Information (*Iₐ*) empfängt, welche die Authentizität des Produkts (1) bestätigt.

2. Verfahren nach Anspruch 1, wobei der gehashte Produktcode (*Cₚ*) in einem ausschließlich für das Produkt (1) bestimmten Teil (7) des Speichers (5) des Etiketts (2) registriert ist.

3. Verfahren nach Anspruch 1 oder 2, wobei der gehashte Produktcode (*Cₚ*) in verschiedenen Teilen des Speichers (5) des Etiketts (2) registriert ist und in jedem dieser Teile mithilfe verschiedener eindeutiger Sicherheitsschlüssel zugreifbar ist.

4. Verfahren nach einem der Ansprüche 1 bis 3, wobei die Hashfunktion (*H*) eine Hashfunktion MD5 ist.

5. Verfahren nach einem der vorhergehenden Ansprüche, wobei die Transformationsfunktion (T) der Verkettung mit wenigstens dem Wert (*Salt*) entspricht, der dem Produkt (1) zugeordnet ist, die in der Form *T(X)* = *X & Salt* geschrieben wird.

6. Verfahren nach einem der vorhergehenden Ansprüche, wobei die Größe des wenigstens einen Sicherheitsschlüssels (*K*) kleiner als die Größe des Ergebnisses (*H (T₁ (UID, Salt))*) der Anwendung der Hashfunktion (*H*) auf die durch die Transformationsfunktion (*T₁*)*,* die als Parameter den dem Produkt (1) zugeordneten Wert (*Salt*) aufweist, modifizierte eindeutige Kennung (*UID*) des Etiketts (2) ist, wobei der wenigstens eine Sicherheitsschlüssel (*K*) insbesondere durch eine zufällige Extraktion von Zeichen aus dem Ergebnis (*H(T₁ (UID, Salt))*) oder durch eine Beschneidung dieses Ergebnisses erzeugt wird.

7. Verfahren nach einem der vorhergehenden Ansprüche, wobei die Größe des Ergebnisses (*H (T₁(UID, Salt))*) der Anwendung der Hashfunktion (*H*) auf die durch die Transformationsfunktion (*T₁*) modifizierte eindeutige Kennung (*UID*) des Etiketts (2) größer oder gleich 16 Byte ist.

8. Verfahren nach einem der vorhergehenden Ansprüche, wobei die Größe des wenigstens einen Sicherheitsschlüssels (*K*) gleich 6 Byte ist.

9. Verfahren nach einem der vorhergehenden Ansprüche, wobei die Information (*Iₐ*), welche die Authentizität des Produkts (1) bestätigt und von der Datenbank (4) an das Lesegerät (3) geliefert wird, die Form eines Authentitätszertifikats (*C_{A}*) des Produkts hat.

10. Verfahren nach einem der vorhergehenden Ansprüche, wobei der wenigstens eine Sicherheitsschlüssel (*K*) und der gehashte Produktcode (*Cₚ*) in der Datenbank (4) über eine verschlüsselte und durch ein insbesondere auf zufällige Weise erzeugtes Passwort geschützte Datei registriert sind.

11. Verfahren nach einem der vorhergehenden Ansprüche, wobei die Datenbank (4) integrierte Algorithmen aufweist, die das Lesen der von dem Lesegerät (3) gesendeten Informationen ermöglicht, insbesondere das Lesen des wenigstens einen Sicherheitsschlüssels (*K*) und des gehashten Produktcodes (*Cₚ*)*.*

12. Verfahren nach einem der vorhergehenden Ansprüche, wobei sich die Datenbank (4) außerhalb des Lesegerätes (3) befindet.

13. Verfahren nach einem der vorhergehenden Ansprüche, wobei die eine oder mehreren Anwendungen, die für die Durchführung des Verfahrens bestimmt sind, von einem entfernten Server auf das Lesegerät (3) heruntergeladen werden.

14. Verfahren nach einem der vorhergehenden Ansprüche, wobei, nachdem das Produkt (1) als authentisch erkannt worden ist, das Lesegerät (3) ein Lesegerät (10) des Ladegeschäfts ansteuert, um einen Code zu erzeugen, der dazu bestimmt ist, auf der Kundenrechnung des Benutzers angegeben zu werden, wobei dieses Lesegerät des Ladegeschäfts insbesondere vollständig autonom in Bezug auf das Lesegerät (3) ist.

## Claims

1. Method of authentication by a NFC reader (3) of an electronic tag (2) fitted to a product (1), the product (1) having an identifier (*ID_{P}*), the tag (2) comprising a memory (5) containing, from manufacture, a unique tag identifier (*UID*) recorded moreover in a database (4), the method being **characterized in that** at least one security key (*K*) has been generated on the basis of the application of a hash function (*H*) to the unique identifier (*UID*) of the tag (2) modified by a transformation function (*T₁*) having as parameter at least one value (*Salt*) associated with the product (1), the said at least one security key (*K*) being recorded in the database (4), a hashed product code (*Cₚ*) associated with the product (1), having been generated on the basis of the application of a hash function (*H*) to the identifier (*ID_{P}*) of the product modified by a transformation function (*T₂*) having as parameter at least the same value (*Salt*) associated with the product (1) and used to generate the said at least one security key (*K*), the transformation functions (*T₁*) and (*T₂*) being identical, the hashed product code (*Cₚ*) having been recorded in the memory (5) of the tag (2) and in the database (4), and being accessible during an interrogation of the tag (2) by the reader (3) by virtue of the said at least one security key (*K*),
and **in that**:
- the reader (3) interrogates the tag (2) to read the unique identifier *(UID)* of the latter,
- the reader (3) transmits the unique identifier *(UID)* of the tag (2) to the database (4),
- if the unique identifier *(UID)* of the tag is recorded in the database (4), the reader (3) receives from the latter the said at least one security key (*K*) associated with the unique identifier (UID) of the tag (2),
- the reader (3) dispatches a reading request to the tag (2) by virtue of the said at least one security key (*K*) received from the database (4),
- in case of positive response of the tag (2), the reader (3) reads, by virtue of the said at least one security key (*K*), the hashed product code (*Cₚ*),
- the reader (3) dispatches a request to the database (4) to verify whether the hashed product code (*Cₚ*) transmitted by the tag (2) corresponds to the hashed product code associated with the tag and recorded in the database (4), and
- in case of correspondence, the reader (3) receives from the database (4) an information item (*Iₐ*) confirming the authenticity of the product (1).

2. Method according to Claim 1, in which the hashed product code (*Cₚ*) is recorded in a part (7), solely dedicated to the product (1), of the memory (5) of the tag (2).

3. Method according to Claim 1 or 2, in which the hashed product code (*Cₚ*) is recorded in various parts of the memory (5) of the tag (2) and is accessible in each of these parts by virtue of various unique security keys.

4. Method according to any one of Claims 1 to 3, in which the hash function (*H*) is an MD5 hash function.

5. Method according to any one of the preceding claims, in which the transformation function (*T*) corresponds to the concatenation with at least the value *(Salt)* associated with the product (1), being written *T(X)* = *X & Salt.*

6. Method according to any one of the preceding claims, in which the size of the said at least one security key (*K*) is less than the size of the result (*H (T₁ (UID, Salt))*) of the hash function (*H*) applied to the unique identifier (*UID*) of the tag (2) modified by the transformation function (*T₁*) having as parameter the value (*Salt*) associated with the product (1), the said at least one security key (*K*) being notably generated by a random extraction of characters of the said result *(H (T₁ (UID, Salt))*) or by a truncation of this result.

7. Method according to any one of the preceding claims, in which the size of the result (*H (T₁ (UID, Salt)))* of the hash function *(H)* applied to the unique identifier *(UID)* of the tag (2) modified by the said transformation function (*T₁*) is greater than or equal to 16 bytes.

8. Method according to any one of the preceding claims, in which the size of the said at least one security key (*K*) is equal to 6 bytes.

9. Method according to any one of the preceding claims, in which the information item (*Iₐ*), delivered by the database (4) to the reader (3) and confirming the authenticity of the product (1), is in the form of an authenticity certificate (*C_{A}*) of the product.

10. Method according to any one of the preceding claims, in which the said at least one security key (*K*) and the hashed product code (*Cₚ*) are recorded in the database (4) by way of a file encrypted and protected by a password, notably generated in a random manner.

11. Method according to any one of the preceding claims, in which the database (4) comprises integrated algorithms allowing the reading of the information items dispatched by the reader (3), notably the reading of the said at least one security key (*K*) and of the hashed product code (*Cₚ*)*.*

12. Method according to any one of the preceding claims, in which the database (4) is external to the reader (3).

13. Method according to any one of the preceding claims, in which one or more applications, intended for the implementation of the method, are downloaded onto the reader (3) from a remote server.

14. Method according to any one of the preceding claims, in which, after the product (1) has been recognized as authentic, the reader (3) controls a shop reader (10) to generate a code intended to be recorded on the user's customer account, this shop reader being notably totally autonomous with respect to the reader (3) .
